# EUROPEAN PATENT APPLICATION

(11) **EP 2 397 733 A1**
(43) Date of publication of application: **21.12.2011**
(21) Application number: 11170102.5
(22) Date of filing: 16.06.2011
(51) Int. Cl.: F16K 15/02

(54) **Check valve**

(30) Priority: 16.06.2010 IT VR20100123
(71) Applicant: Dalla Benetta, Raimondo Antonio, 36070 Trissino (VI) (IT)
(72) Inventor: Dalla Benetta, Raimondo Antonio, 36070 Trissino (VI) (IT)
(74) Representative: Fisauli, Beatrice A. M.

(57) **Abstract**

Retention valve (10) suitable for allowing the flow of a fluid according to a first direction (B) and for cutting off the flow according to a second direction (A) which is opposite to the first direction, comprises:
- a first hollow lateral element (11), attachable to a first conduit;
- a second hollow lateral element (21), attachable to a second conduit and coupled to the first lateral element (11);
- stopping means (39) movable inside the first lateral element (11) and the second lateral element (21), suitable for cutting off the flow of the fluid in the second direction (A), by seating on a portion of the internal surface of the second lateral element (21);
- guide means (30) to which the stopping means (39) are coupled and suitable for guiding the movement of the stopping means (39).

## Description

The present invention refers, in general, to a check valve. More particularly, it is a retention valve which is easy to be assembled and showing a simple structure.

It is a well know fact that retention valves are used in hydraulic systems in order to only allow for a fluid to flow in a single direction; thus, these valves allow the fluid to flow in one direction while preventing it from flowing in the opposite direction.

The opening and closing of the valve is achieved by the movement of a shutter, which is activated according to the fluid's direction of flow.

Based on the known techniques, these valves normally have a complex structure which, as a result, requires the painstaking assembly of their various elements.

Moreover, the complexity of the known valves can lead to irregular shutter movements, thus preventing the complete closure of the valve itself and only partially blocking the flow of the fluid in the direction to be impeded.

Another issue associated with the current valves has to do with their reduced holding capacity in the event of the deterioration of the elements employed for closing the valve, even if only due to normal wear and tear. As a result, the valve must be removed and replaced following the deterioration of these elements, which are usually made from an elastomer.

The purpose of this invention is to create a retention valve with a simple structure, that can be easily assembled and will only require simple and limited installation operations.

Another purpose of this invention is to create a retention valve that can be manufactured using a limited number of components.

Another objective of this invention is to create a retention valve that offers reliable functionality and is robust enough to provide for an excellent holding capacity.

This invention is also aimed at obtaining a valve that functions effectively even when its components have been damaged by normal wear and tear due to regular functionality.

Last but not least, this invention also has the objective of creating a retention valve whose structure can be produced using known technologies, thus providing for reduced costs and processing times.

According to this invention, these goals can be achieved with a retention valve that allows for fluid to flow in a first direction and prevents it from flowing in a second direction opposite to the first direction. This valve is made up of a first lateral hollow element to be fastened to a first conduit, and a second lateral hollow element to be fastened to a second conduit and coupled with the first lateral element. According to the invention, the valve also includes mobile stopping means located inside the first lateral element and the second lateral element, which serve the purpose of blocking the flow of fluid in the second direction by sealing off a portion of the inner surface of the second lateral element. These stopping means are coupled with appropriate guide means, which serve the purpose of guiding the movements of the stopping means themselves.

According to the invention, this retention valve is characterized by the fact that the portion of the second lateral element's inner surface with which the stopping means will make contact is inclined with respect to the stopping means' direction of movement.

With this configuration, the stopping means' contact with the inner surface of the second lateral element is facilitated, thus providing for effective blockage regardless of the wear status of the stopping means themselves.

As an additional advantage, the guide means can include a spring, with the lower end in contact with the first lateral element and the upper end coupled with the stopping means. This spring will be pre-loaded and will serve the purpose of forcing the stopping means to make contact with the inclined portion of the second lateral element's inner surface.

ln this manner, the spring, which also serves as a guide for the movement the stopping means, is simply positioned between the stopping means themselves and the first lateral element. For this reason, no other components are required in order to secure the spring to the main body of the valve (or rather, the first or second lateral elements).

Thus, the retention valve will have a simple structure that can be easily assembled.

Moreover, the second lateral element can include a first sleeve, a first half-shell and a first connection edge, all of which can be fastened together. In particular, the first end of the first sleeve can be coupled with the second conduit. The first half-shell, shaped like a frustum cone, will be coupled with the first sleeve and its inner surface will include the portion of the surface with which the stopping means will make contact. The first connection edge will be coupled with the first half-shell, by means of a groove located on the upper portion of the first connection edge and the first half-shell.

As an additional advantage, the stopping means can include a bearing body to which a beating ring will be fastened, which will serve the purpose of making contact with the inclined portion of the second lateral element's inner surface. In particular, the bearing body can be equipped with at least one wing that protrudes in a radial fashion so that, when closing the valve, once the beating ring makes contact with the inclined portion of the second lateral element's inner surface, the wing will be inserted into the second lateral element's upper groove.

While the beating ring is made from plastic material, elastomer for example, the wings and the lateral elements are made from hard material. As a result, the interaction between the one or more wings on the bearing body and the second lateral element's upper groove will securely block the movement of the stopping means in relation to the second lateral element, thus preventing the beating ring from being subjected to any extreme stress and safeguarding its integrity.

The first lateral element may also include an upper groove into which at least one wing can be inserted when, during the valve's opening phase, the stopping means move away from the second lateral element, thus compressing the spring. This will ensure the flow of liquid while the valve is open, even if the stopping means are pushed towards the first lateral element, as they will not create any blockage.

The beating ring can be designed with a curved surface in order to make perfect contact with the inclined portion of the second lateral element's inner surface. This will result in a perfectly efficient and watertight seal while the valve is closed, regardless of the wear status of the beating ring.

The first lateral element can be designed with a lower groove into which the lower end of the spring can be inserted. In this manner, the spring's coupling with the lateral element will not require the use of any additional components. The construction and assembly of the valve are rendered quite practical thanks to the fact that the first lateral element and the second lateral element can be identical to each other. Their usage will change based on which of the two is used to support the spring, whereby the other will serve as the contact for the stopping means.

As and additional advantage, the stopping means can be designed with a conical cover in order to facilitate the flow of the fluid during the valve's opening phase.

Moreover, according to the invention, the retention valve can be equipped with a central hollow element to be used as a coupling between the first lateral element and the second lateral element.

For exemplary and non-exhaustive purposes, the invention's additional specifications and features are provided in greater detail within the description below, as well as within the attached diagrams, which include:

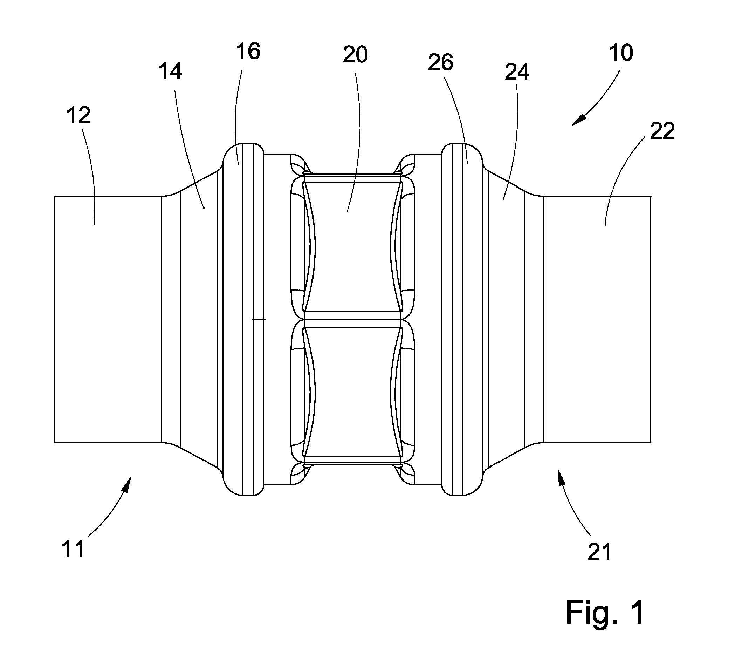

Figure 1 frontal view of a valve according to the innovation;
Figure 2 a lateral cross-section view of the valve in figure 1;
Figure 3 a lateral exploded view of the valve in figure 1;
Figure 4 an isometric exploded view of the valve in figure 1;

In reference to the attached diagrams, the number 10 indicates a retention valve comprised of a first lateral element (11) and a second lateral element (21), which are coupled together using a central element (20). The three elements (11, 20 and 21) are fastened coaxially to one another to form a single hollow structure that will allow for the passage of a fluid.

The first lateral element (11) includes a first sleeve (12) which is coupled, to form a single body, with a first half-shell (14) shaped like a frustum cone, which, in turn, ends with a first connection edge (16).

Likewise, the second lateral element (21), which is identical to the first lateral element (11), includes a second sleeve (22) which is coupled, to form a single body, with a second half-shell shaped like a frustum cone (24), which, in turn, ends with a second connection edge (26).

The first sleeve (12) and the second sleeve (22) are internally threaded so as to allow them to be connected to pipes with appropriate threading.

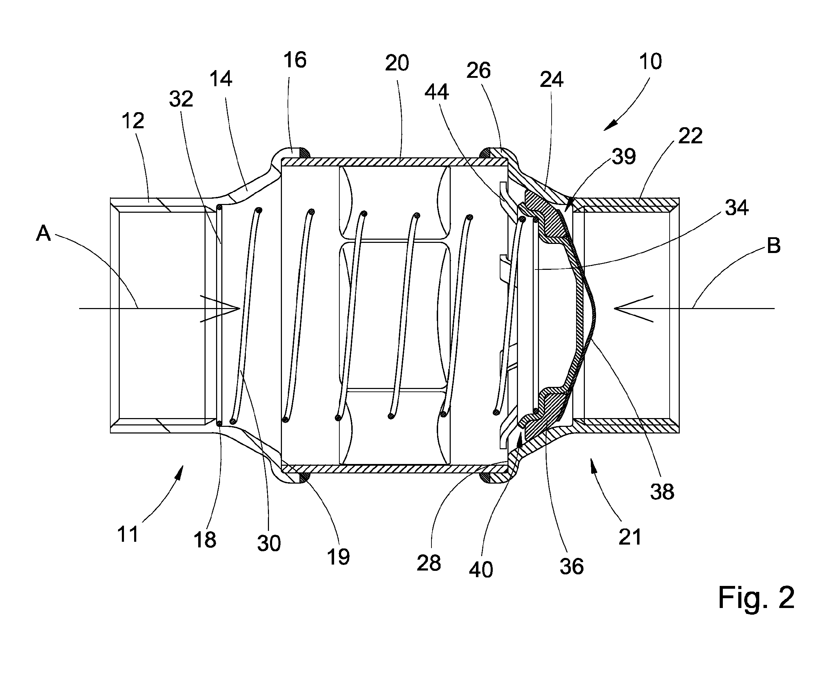

As shown in figure 2, the first connection edge (16) and the second connection edge (26) are internally threaded, so that the central element (20), with its threaded external ends, can be coupled to the first lateral element (11) and the second lateral element (21).

The structure of the first lateral element (11), as well as that of the second lateral element (21), is such that a lower groove (18) has been included between the first sleeve (12) and the first half-shell (14). Figure 2 shows the groove (18) on the first lateral element (11).

An upper groove has also been included between the half-shell and the connection edge of each lateral element. In particular, in Figure 2, the number 28 indicates the upper groove of the second lateral element (21).

The valve (10) contains a spring (30) with one circular lower end (32), which is inserted into the lower groove (18), with which the spring itself (30) makes contact.

The spring (30) also includes an upper circular end (34), which counteracts the movement of the stopping means (39), which serve to press against the inner wall of the second half-shell (24), as shown in Figure 2.

More specifically, the stopping means (39) are made up of three assembled components: a bearing body (40), a beating ring (36) and an opening cone (38).

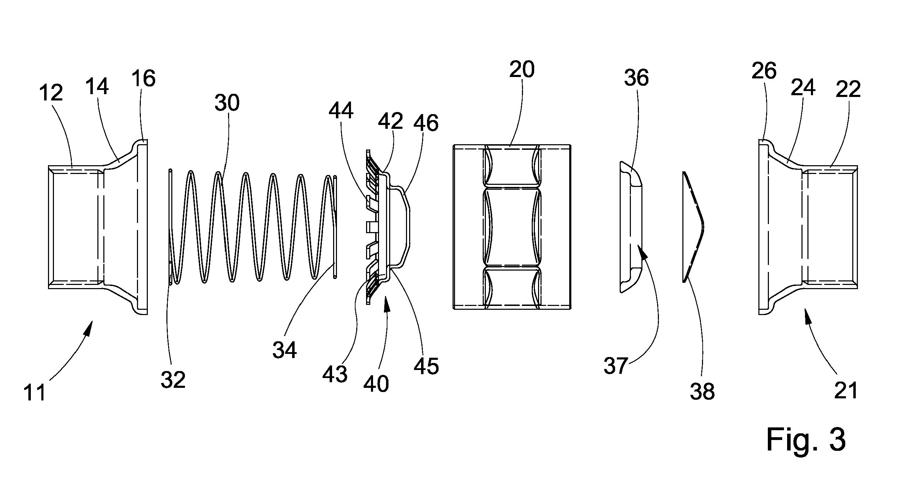

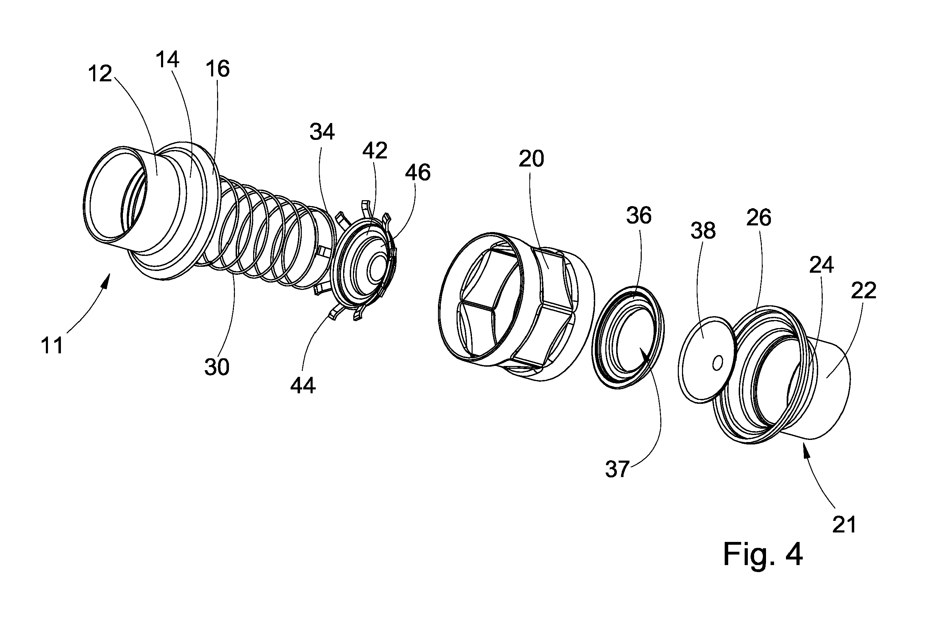

The bearing body (40), shown unassembled in Figures 3 and 4, is made up of a cylindrical body (42), with a cylindrical end (46) protruding from one side of its base. A number of wings (44) protrude from the side opposite to that of the cylindrical end (46), specifically from a circular lower edge (for better clarity, only a single wing is indicated with a reference number in the diagrams). Thanks to its particular structure, the bearing body (40) contains an internal groove (43) inside the cylindrical body (42), and an outer groove (45) on the outside of the cylindrical body (42), adjacent to the lateral wall of the cylindrical end (46).

The elastomer beating ring (37), which contains a through hole (37), rests on the outer groove (45) so that the cylindrical end (46) of the bearing body (40) passes through the hole (37) itself.

As shown in figure 2, a cover cone (38) is fastened to the upper portion of the cylindrical end (46) and the beating ring (36).

The stopping means (39) are connected to the spring (30), the circular upper extremity (34) of which is inserted within the bearing body's (40) inner groove (43), with which the spring (30) itself makes contact.

The spring (30) is loaded is such a way so as to keep the stopping means (39) in contact with the second lateral element (21), thus closing the valve. More precisely, the closure of the valve is obtained by means of the beating ring (36), with its curved profile, coming into contact with the inner surface of the second half-shell (24), shaped like a frustum cone.

Moreover, if the fluid is flowing through the valve (10) in the direction indicated by the letter A in figure 2, it is the fluid itself, as well as the action of the spring (30), that will keep the stopping means (39) in contact with the second half-shell (24), thus preventing the fluid from passing.

Vice versa, if the fluid is flowing through the valve (10) in the opposite direction, indicated by the letter B in figure 2, the force of the fluid will counteract that of the spring (30) and, if greater, will move the stopping means (39) in the direction of the flow, thus allowing the fluid to pass freely through the valve (10).

During the closure of the valve (10), the wings (44), which come into contact with the upper groove (28) of the second lateral element (21), will prevent the stopping means from moving beyond a certain position that would cause the beating ring (36) to be subjected to unnecessary stress and excessive wear. During the opening of the valve (10), the same wings (44) can be made to come into contact with the upper groove (19) of the first lateral element (11), thus leaving space for the passage of the fluid through the beating ring (36) and the central element (20) in the direction indicated by the letter B.

As can be understood from the description and the diagrams, the valve according to the invention has a simple structure and is comprised of a small number of components, thus rendering it easy to manufacture and assemble. Moreover, the blockage of the fluid is obtained by means of the curved cross-section beating ring (36) coming into contact with the inclined surface (shaped like a frustum cone) of the second half-shell (24). The ring's interaction with an inclined surface provides for a consistently effective closure, since even if the stopping means (39) were to move in an irregular fashion (or rather, not perfectly straight and aligned), they would still make contact with the second half-shell (24) in such a way so as to entirely obstruct the passage of the fluid. Variations may be implemented, in terms of both the form and dimensions of the valve's components, while maintaining its functionality intact. Such variations are nevertheless to be considered as included within the sphere of the invention itself, as defined by the following claims.

## Claims

1. Retention valve (10) suitable for allowing the flow of a fluid according to a first direction (B) and for cutting off the flow according to a second direction (A) which is opposite to the first direction, comprising:
- a first hollow lateral element (11), attachable to a first conduit;
- a second hollow lateral element (21), attachable to a second conduit and coupled to the first lateral element (11);
- stopping means (39) movable inside the first lateral element (11) and the second lateral element (21), suitable for cutting off the flow of the fluid in the second direction (A), by seating on a portion of the internal surface of the second lateral element (21);
- guide means (30) to which the stopping means (39) are coupled and suitable for guiding the movement of the stopping means (39);
**characterized by the fact that** the portion of the internal surface of the second lateral element (21) on which the stopping means (39) can seat, is inclined relative to the direction of the movement of the stopping means (39).

2. Retention valve (10) according to claim 1, wherein the guide means comprise a spring (30) comprising a lower end (32) seating on the first lateral element (11) and an upper end (34) coupled to the stopping means (39), said spring (30) being preloaded and suitable for make the stopping means (39) seat on the inclined portion of the internal surface of the second lateral element (21).

3. Retention valve (10) according to one of the preceding claims, wherein the second lateral element (21) comprises:
- a first sleeve (22) fixable with a first end to the second conduit;
- a first half-shell (24) shaped like a frustum cone, connected to the first sleeve (22) and whose internal surface comprises the portion of surface on which the stopping means (39) seat;
- a first connection edge (26) connected to the first half-shell (24), an upper groove (28) being obtained between the first connection edge (26) and the first half-shell (24).

4. Retention valve (10) according to claim 3, wherein the stopping means (39) comprise a bearing body (40) to which a beating ring (36) is attached, said beating ring (36) suitable for seating on the inclined portion of the internal surface of the second lateral element (21), said bearing body (40) comprising at least a wing (44) which extend radially, so that, when the valve is closed and the beating ring (36) is seated on the inclined portion of the internal surface of the second lateral element (21), the at least a wing (44) can seat on the upper groove (28) of the second lateral element (21).

5. Retention valve (10) according to claim 4, wherein the first lateral element (11) comprises an upper groove (19) on which the at least a wing (44) can seat, when the valve is opening and the stopping means (39) go away from the second lateral element (21) and press the spring (30).

6. Retention valve (10) according to claim 4 or 5, wherein the beating ring (36) comprises a curve surface suitable for seating on the inclined portion of the internal surface of the second lateral element (21).

7. Retention valve (10) according to one of the claims 2 to 6, wherein the first lateral element (11) comprises a lower groove (18) in which the lower end (32) of the spring (30) is received.

8. Retention valve (10) according to one of the preceding claims, wherein the first lateral element (11) and the second lateral element (21) are equal to each other.

9. Retention valve (10) according to one of the preceding claims, wherein the stopping means (39) comprise a cone-shaped covering cone (38) in order to facilitate the flow of fluid when the valve is open.

10. Retention valve (10) according to one of the preceding claims, wherein a hollow central element (20) is comprised, the first lateral element (11) and the second lateral element (21) being connected to each other by means of the central element (20).
